# EUROPÄISCHE PATENTSCHRIFT

(11) **EP 2 566 413 B1**
(45) Veröffentlichungstag und Bekanntmachung des Hinweises auf die Patenterteilung: **09.11.2016**
(21) Anmeldenummer: 11721998.0
(22) Anmeldetag: 05.05.2011
(51) Int. Cl.: A61C 8/00

(54) **DENTALIMPLANTAT**
DENTAL IMPLANT
IMPLANT DENTAIRE

(30) Priorität: 05.05.2010 DE 102010019582; 05.05.2010 DE 102010019583
(43) Veröffentlichungstag der Anmeldung: 13.03.2013
(60) Teilanmeldung: 16191828.9
(73) Patentinhaber: Zipprich, Holger, 64342 Malchen (DE)
(72) Erfinder: Zipprich, Holger, 64342 Malchen (DE)
(74) Vertreter: Tergau & Walkenhorst Patentanwälte - Rechtsanwälte
(86) Internationale Anmeldenummer: PCT/EP2011/002229
(87) Internationale Veröffentlichungsnummer: WO 2011/138029

(56) Entgegenhaltungen:
- WO-A1-2004/008983
- WO-A1-2004/080328
- WO-A1-2010/049135
- KR-A- 20070 009 060
- US-A1- 2005 186 537
- US-B1- 6 652 765

## Beschreibung

Die Erfindung bezieht sich auf ein Dentalimplantat mit einem zur Einbringung in einen Kieferknochen vorgesehenen ersten Implantat-Teil und mit einem diesem zugeordneten, zur Anbringung eines Zahnersatzstücks vorgesehenen zweiten Implantat-Teil, wobei die Implantat-Teile über einen an eines der Implantat-Teile angeformten, in einen im anderen Implantat-Teil vorgesehenen Aufnahmekanal oder eine Formausnehmung einschiebbaren Verbindungszapfen oder Kontaktstift mechanisch miteinander verbindbar sind.

Derartige, so genannte zwei- oder mehrteilige Dentalimplantate sind in vielfältigen Formen bekannt. Sie werden üblicherweise anstelle eines extrahierten oder ausgefallenen Zahnes in den Kieferknochen eingesetzt, um dort nach einer Einheilphase von drei bis vier Monaten ein als Zahnersatz dienendes prothetisches Teil oder eine Krone zu halten. Dazu ist ein derartiges Dentalimplantat üblicherweise als geeignet geformter Metallkörper ausgebildet, wobei das erste, in der Regel auch als Pfostenteil bezeichnete Implantat-Teil üblicherweise durch Einschrauben an der vorgesehen Stelle in den Kieferknochen eingesetzt wird. Das Pfostenteil weist dabei in der Regel am apikalen Ende ein zumeist selbstschneidendes Schraubengewinde auf, mit welchem das Pfostenteil in das entsprechend präparierte Implantatbett eingesetzt wird.

Ein derartiges Dentalimplantat ist üblicherweise grundsätzlich zweiteilig aufgebaut und umfasst das zur Einbringung in den Kieferknochen vorgesehene Pfostenteil und ein zugeordnetes Aufbauteil, an das das als Prothese oder dergleichen vorgesehene Zahnersatzstück anbringbar ist. Das Pfostenteil und ebenso das Kopf- oder Aufbauteil bestehen aus Metall und zwar insbesondere aus Titan, einer Titanlegierung oder einer titanhaltigen Legierung. Das Pfostenteil ist an seiner Aussenseite üblicherweise mit einem Gewinde versehen, welches als selbstschneidendes oder auch als nicht selbstschneidendes Gewinde ausgeführt sein kann. Das Pfostenteil wird üblicherweise in einem entsprechend aufbereiteten Implantatbett des Kieferknochens verankert.Die Konstruktion des im Aussenbereich des Pfostenteils vorgesehenen Gewindes ist dabei üblicherweise für eine hohe Primärstabilität der Anordnung und eine gleichmässige Weiterleitung der bei der Kaubelastung des Dentalimplantats auftretenden Kräfte in den Kieferknochen ausgelegt.

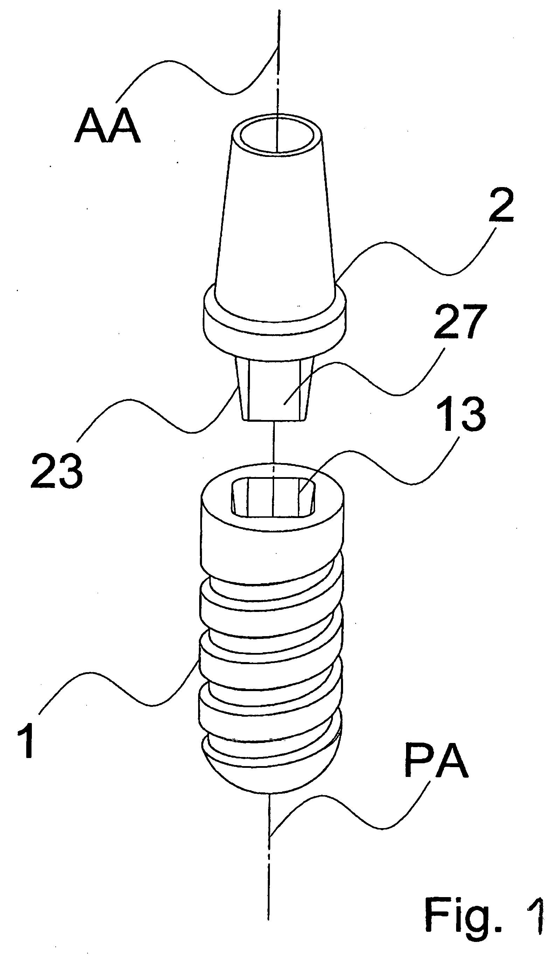

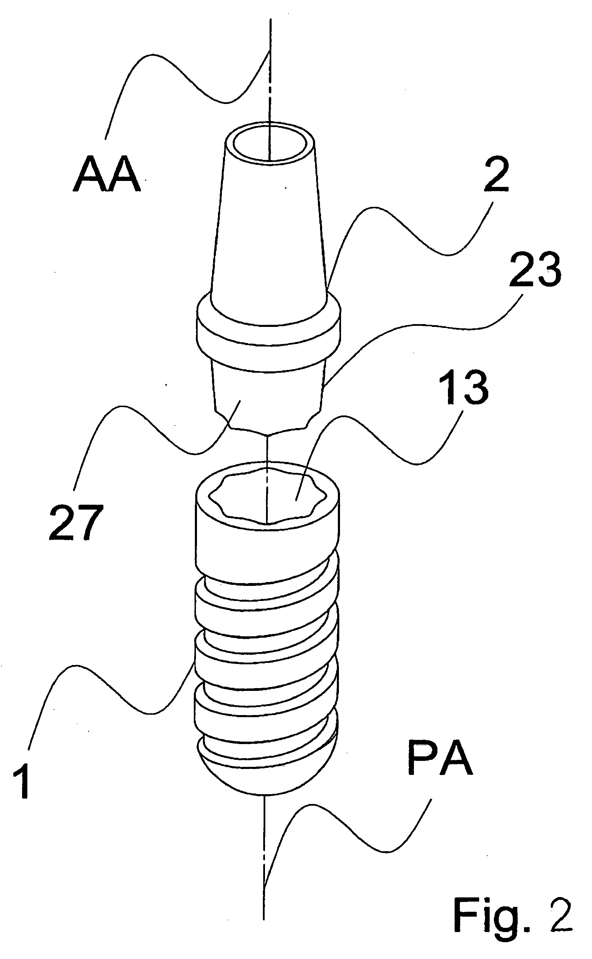

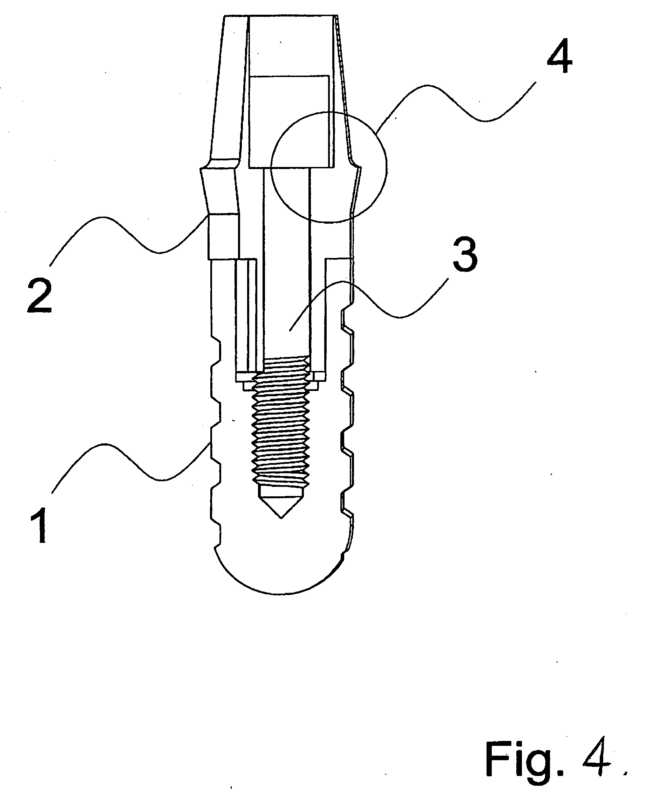

Figuren 1 und 2 zeigen je ein bekanntes Dentalimplantat (Pfostenteil) mit einem dazugehörigen Aufbauteil und einer Verbindungsschraube. In dem Pfostenteil 1 ist eine Formausnehmung 13 eingebracht, welche exakt auf den an das Aufbauteil 2 angeformten Kontaktstift 23 abgestimmt ist. Die Formausnehmung 13 im Pfostenteil 1 bildet im eingegliederten Zustand mit dem an das Aufbauteil 2 angeformten Kontaktstift 23 ein Gesperre gegenüber allen Kräften und Momenten ausser gegenüber einer Kraft, welche beide Teile voneinander weg bewegt. Um eine ungewollte Trennung der beiden Bauteile aufgrund einer derartigen Kraft zu vermeiden, wird die Verbindungsschraube 3 (siehe Figur 4) mit dem entsprechenden Anzugsmoment montiert.

Dentale Implantate (Pfostenteile) haben üblicherweise äusserlich ein Gewinde (siehe Figuren 1 und 2). Grund hierfür ist, dass Pfostenteile meistens in den Kieferknochen eingeschraubt werden. Das Einschrauben der Pfostenteile erfolgt entweder über ein für diesen Zweck vormontiertes Aufbauteil (Eindrehaufbauteil) oder ein Instrument, welches direkt in das Pfostenteil eingreift. Das bedeutet, dass die Pfostenteile in ihrer Verpackung entweder mit oder ohne ein vormontiertes Eindrehaufbauteil gelagert sind. Der Eindrehvorgang selbst erfolgt entweder manuell oder über eine Maschine, welche das benötigte Drehmoment und die gewünschte Drehzahl bereitstellt. Zur Übertragung des Drehmomentes vom Eindrehinstrument oder dem Eindreh-Aufbauteil auf das Pfostenteil wird meist ein Gehemme und oder ein Gesperre zwischen den Bauteilen genutzt. Bei der Verwendung eines Gesperres wird das Gesperre auch später als Indizierung verwendet. Dies hat den Vorteil, dass ein und dasselbe geometrische Teil, hier ein Gesperre, für mehrere Anwendungen verwendet werden kann.

KR-A-10 2007 009 060 (siehe Figur 1) beschreibt eine Konusverbindung wobei die Querschnittsfläche nicht rund ist, sondern ein Quadrat mit abgerundeten Ecken aufweist. Die Funktionsflächen 17 und 27 sind nicht parallel zur Pfostenteilachse PA und sind somit zu der Pfostenteilachse PA geneigt. Das Aufbauteil und das Pfostenteil bilden aufgrund der zur Pfostenteilachse geneigten Funktionsflächen nur mit montierter Verbindungsschraube ein rotatorisches Gesperre. Ist die Verbindungsschraube nicht montiert und liegen die Funktionsflächen des Aufbauteil an denen des Pfostenteils an und es ergibt sich zwischen den Bauteilen ein Moment, werden diese sich gegeneinander verdrehen und voneinander weg bewegen.

US-A-2005 186 537 (siehe Figur 2) beschreibt eine Konusverbindung, wobei die Querschnittsfläche nicht rund ist sondern konkave und konvexe Anteile beinhaltet. Die Funktionsflächen 17 und 27 sind nicht parallel zur Pfostenteilachse PA und sind somit zu der Pfostenteilachse PA geneigt. Das Aufbauteil und das Pfostenteil bilden aufgrund der zur Pfostenteilachse geneigten Funktionsflächen nur mit montierter Verbindungsschraube ein rotatorisches Gesperre. Ist die Verbindungsschraube nicht montiert und liegen die Funktionsflächen des Aufbauteil an denen des Pfostenteils an und es ergibt sich zwischen den Bauteilen ein Moment, werden diese sich gegeneinander verdrehen und voneinander weg bewegen.

WO-A-2004 080 328 beschreibt ein Dentalimplantat mit einem zur Einbringung in einen Kieferknochen vorgesehenen ersten Implantat-Teil und mit einem diesem zugeordneten, zur Anbringung eines Zahnersatzstücks vorgesehenen zweiten Implantat-Teil. Die Implantat-Teile sind über einen an eines der Implantat-Teile angeformten, in einen im anderen Implantat-Teil vorgesehenen Aufnahmekanal einschiebbaren Verbindungszapfen mechanisch miteinander verbindbar. Der Verbindungszapfen und daran angepasst der diesem zugeordnete Aufnahmekanal weist jeweils eine zur Längsachse des ersten Implantat-Teils geneigte, im Querschnitt kreisrunde Kontaktfläche auf. Das erste, zur Einbringung in den Kieferknochen vorgesehene Implantat-Teil weist im Verbindungsbereich einen Indizierungsbereich in Form eines Rotationsgesperres auf mit in Bezug zur Längsachse des Verbindungszapfens parallelen Funktionsflächen.

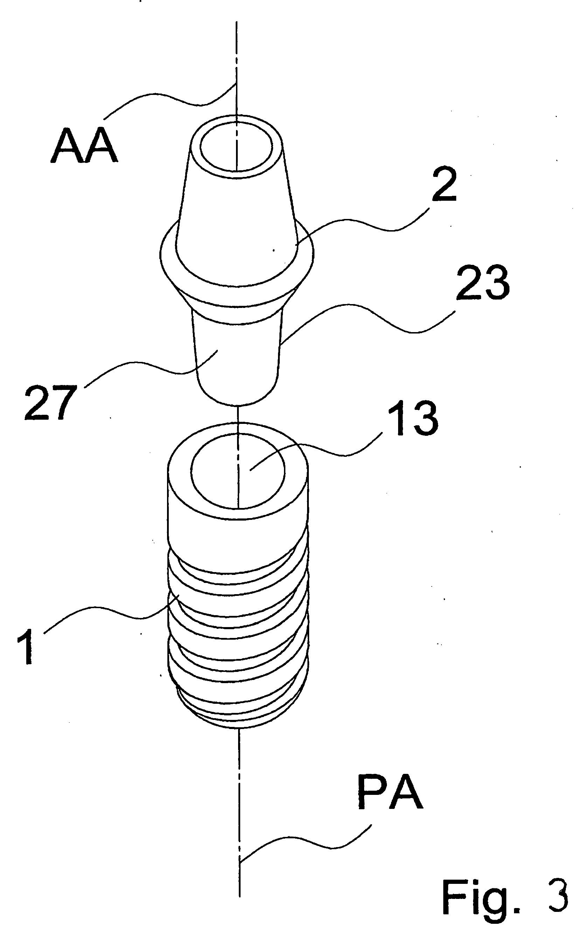

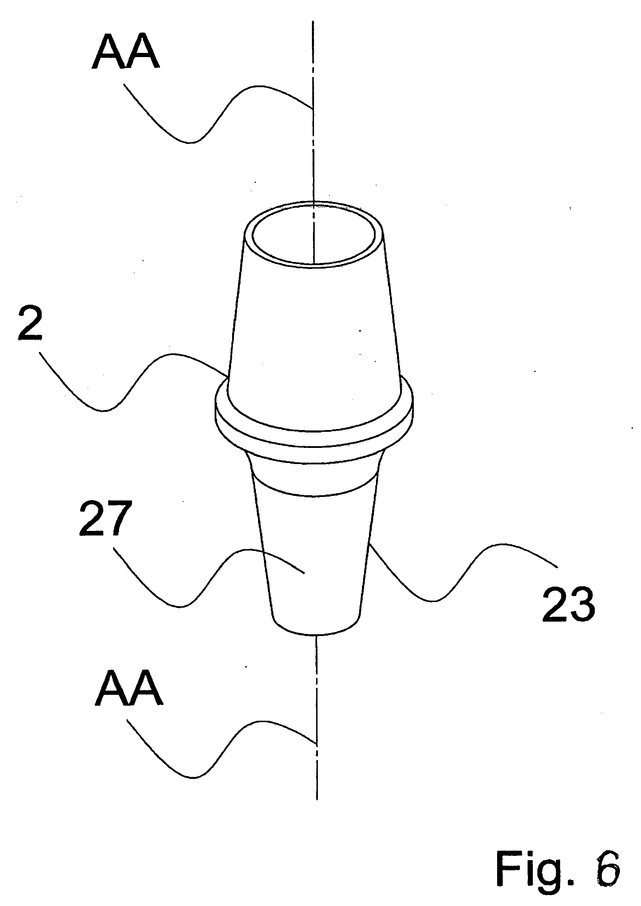

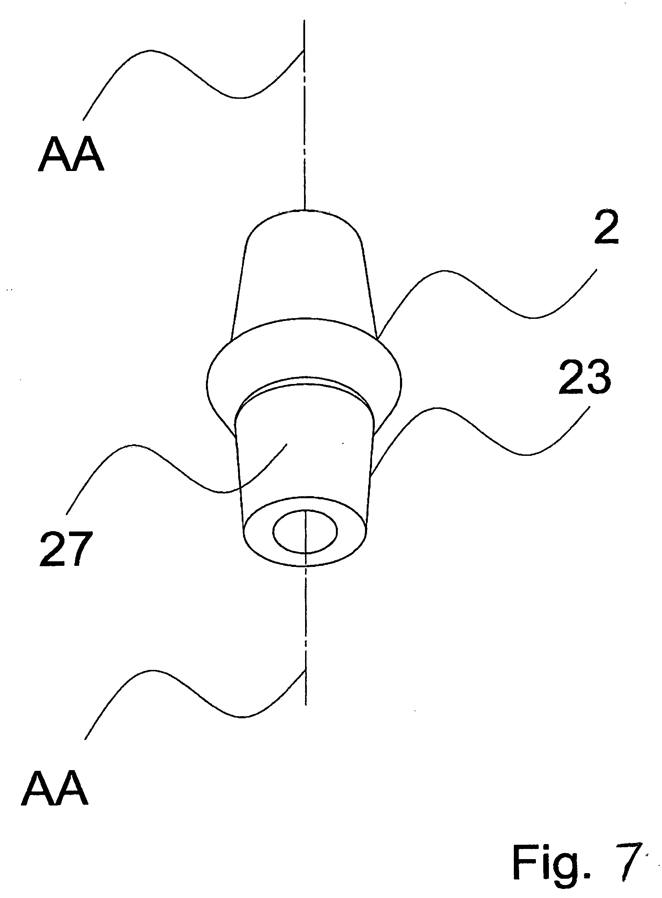

WO-A-2010 049 135 (siehe Figuren 3, 6 und 7), das am 06.05.2010 veröffentlicht wurde, beschreibt ein Pfostenteil 1 mit einer ovalen / elliptischen Formausnehmung 13 und ein Aufbauteil 2 bei welchem die Querschnittsfläche des an das Aufbauteil 2 angeformten Kontaktstifts 23 nicht rund sondern oval gestaltet ist. Die dazugehörige Funktionsfläche 27 ist konisch und somit zu Aufbauteilachse AA geneigt. Die Kontaktflächen am Pfostenteil und / oder am Aufbauteil sind mit einer reibungsreduzierenden Beschichtung versehen.

Diese konischen Anteile des Rotationsgesperres bzw. diese konischen Rotationsgesperre sind streng genommen keine reinen Rotationsgesperre mehr. Ursache hierfür ist die Gegebenheit, dass bei der Übertragung eines Momentes welches an dem Aufbauteil anliegt und um dessen Achse gerichtet ist, an das Pfostenteil kein reines Moment weiterleitet. Zwischen dem Aufbauteil und dem Pfostenteil wirken ein Drehmoment und eine Kraft, welche so gerichtet ist dass sich das Aufbauteil und das Pfostenteil voneinander abstossen. Die Höhe dieser Kraft ist abhängig von der Geometrie der Verbindung und den Haft- und Gleitreibungseigenschaften der Verbindungspartner an den gegenseitigen Kontaktstellen. Befindet sich die Verbindung zwischen dem Pfostenteil und dem Aufbauteil im endgültig montierten Zustand, also mit montierter Verbindungsschraube wirkt sich dieser Effekt in Abhängigkeit der geometrischen Gestaltung kaum aus. Je geringer der Konuswinkel und je höher die Haft- und Gleitreibung umso geringer die Kraft welche die Bauteile auseinanderdrückt. Je grösser der Konuswinkel und je geringer die Haft- und Gleitreibung desto grösser der Anteil der der Kraft welche die Bauteile auseinanderdrückt.

Diese Abstossung hat bezogen auf den praktischen Einsatz von Dentalimplantaten verschiedene Einflüsse. Die Insertion eines Pfostenteils in den Knochen erfolgt über eine Rotation weil die Aussengeometrie der Pfostenteile üblicherweise ein Gewinde aufweist über welches das Pfostenteil im Knochen verankert wird. Das Eindrehen des Pfostenteils erfolgt über ein Eindrehwerkzeug. Dieses Werkzeug greift entweder direkt in das Rotationsgesperre / die Indizierung zu Übertragung des nötigen Drehmomentes oder über einen auf dem Pfostenteil vormontierten Eindrehaufbauteil. Dieses Eindrehaufbauteil ist meist mittels einer Verbindungsschraube auf dem Pfostenteil befestigt und nutzt die Indizierung als Rotationsgesperre zur Übertragung des zum Eindrehen nötigen Drehmomentes. In Richtung des Eindrehwerkzeuges befindet sich meist ein weiteres Rotationsgesperre. Handelt es sich bei der Verbindung zwischen dem Pfostenteil und dem Aufbauteil eines Dentalimplantat um ein Rotationsgesperre mit konischen Anteilen kann mit Hilfe eines mittels einer Verbindungsschraube vormontierten Eindrehaufbauteils mit einer problemlosen Insertion des Pfostenteils gerechnet werden. Da diese Eindrehaufbauteile und die dazugehörigen Verbindungsschrauben nach der Insertion des Pfostenteils im Knochen demontiert werden und anschliessend nicht weiter verwendbar sind kommt es zu zusätzlichen Kosten und überflüssigen Demontagen. Kann mit dem Eindrehwerkzeug direkt in das Pfostenteil eingegriffen werden, können Kosten für den Patienten und Arbeiten an dem Patienten entfallen. Dies stellt einen enormen Vorteil dar, ist aber mit einer Verbindung, welche in der Indizierung konische bzw. geneigte Funktionselemente besitzt schwierig. Je grösser die Haft- und die Gleitreibung zwischen den Kontaktflächen von Aufbauteil und Pfostenteil, desto niedriger die abstossende Kraft und desto niedriger die Gefahr der Komplikation bei dem Eindrehen des Postenteils in den Knochen mit der Verwendung eines direkt in das Pfostenteil eingreifenden Eindrehwerkzeuges welches über eine konische Indizierung eingreift.

Die Gestaltung der Verbindung zwischen dem Aufbauteil und dem Pfostenteil eines Dentalimplantates wie sie in Figuren 1 bis 3 dargestellt sind, weisen allerdings auch deutliche Vorteile auf. Bei der Montage von einem Aufbauteil in einem Pfostenteil mit einer rein parallelwandigen Indizierung (Rotationsgesperre ohne konische Funktionsgeometrien und bei der Übertragung von Momenten um deren Achse reine Momentweiterleitung ohne entstehen einer abstossenden Kraft) muss vor der translatorischen Eingliederung die exakte Position zwischen dem Aufbauteil und dem Pfostenteil gegeben sein. Bei solchen Verbindungen kann der Umwandlungseffekt von einem reinen Moment in die Ubereinanderlagerung eines Moments und einer Kraft auch umgekehrt genutzt werden. Beim eingliedern des Aufbauteils in das Pfostenteil ist es nicht notwendig das die Indizierung zwischen dem Aufbauteil und dem Pfostenteil exakt zueinander ausgerichtet sind. Stimmt die Position nicht exakt überein kann aus der aufeinander zu Bewegung (rein translatorisch) eine überlagerte Rotation erzwungen werden. Treten die Flächen der Indizierung von Aufbauteil und Pfostenteil zueinander in Kontakt und sind aber rotatorisch nicht zueinander Ausgerichtet wird die translatorische Bewegung in einer translatorische und eine rotatorische Bewegung umgewandelt. Folglich kommt es beim Fügen zu einer rotatorischen Ausrichtung bzw. einer rotatorischen Selbstzentrierung des Aufbauteils im Pfostenteil. Dieser Effekt vereinfacht die Findung der Indizierung und somit die Eingliederung des Aufbauteils in oder auf dem Pfostenteil.Wichtig ist bei der rotatorischen Selbstzentrierung, dass das Aufbauteil nicht an der Rotation behindert wird. Soll die rotatorische Selbstzentrierung mit dem Eindrehen der Verbindungsschraube genutzt werden besteht die Möglichkeit dass das Aufbauteil für die Endposition selbstständig rechtsdrehend oder selbstständig linksdrehend zentriert werden muss. Erfolgt die selbstständige Zentrierung in Drehrichtung der Schraube unterstützt diese den selbst zentrierenden Effekt. Erfolgt die selbstständige Zentrierung entgegen der Drehrichtung der Schraube wirkt diese dem selbst zentrierenden Effekt entgegen. Auch die Dimensionierung von Konuswinkel, Materialpaarung von Aufbauteil und Pfostenteil und die Oberflächenbeschaffenheit nehmen einen grossen Einfluss auf die Güte der Selbstzentrierung. Es ist besonders vorteilhaft wenn die Haft- und die Gleitreibung zwischen den Kontaktflächen der konischen Indizierung zwischen dem Aufbauteil und dem Pfostenteil möglichst niedrig sind.

Versuche bei konisch selbst zentrierenden Indizierungen haben gezeigt, dass je niedriger der Konuswinkel ist, desto grösser die Möglichkeit einer konischen Selbsthemmung zwischen dem Aufbauteil und dem Pfostenteil. Diese Selbsthemmung ist zwar erwünscht aber erst in der Endposition des Aufbauteils im oder auf dem Pfostenteil. Kommt es vor der rotatorischen Endposition zu einer Hemmung zwischen den beiden Bauteilen, z.B. durch die Tatsache, dass sich das Aufbauteil entgegen der Drehrichtung der Verbindungsschraube selbst zentrieren müsste, wird die mit der Selbstzentrierung gewünschte Vereinfachung nicht erreicht. Es zeigte sich zwar dass im Gegensatz zu herkömmlichen Indizierungen die fehlerhaft montiert wurden, sich die Hemmung durch ein Wackeln am Aufbauteil löst, somit schnell bemerkt wird und das sich anschliessend das Aufbauteil weiter zentriert, jedoch ist dies noch nicht zufrieden stellend ausgeführt.

Verbindungen wie sie auf den Figuren 1 bis 3 dargestellt sind besitzen eine rotatorische Selbstzentrierung. Das bedeutet, dass bei dem Eingliedern bzw. Fügen bzw. Aufeinandersetzen von Aufbauteil und Pfostenteil, zwar nicht in allen rotatorischen Positionen, aber häufig axialkraftunterstützt eine rotatorische Bewegung erzwungen wird bzw. ein Drehmoment hervorgerufen wird. Hierbei hat, ähnlich wie bei diversen Getrieben eine rein translatorische Bewegung eine rotatorische Bewegung zur Folge. Dies wird im Folgenden als rotatorische Selbstzentrierung bezeichnet. Im Umgekehrten Fall ist es allerdings so, dass im Montierten Zustand ein Drehmoment, welches auf die montierten Bauteile wirkt, auch eine Axialkraft zur Folge hat. Die rotatorische Selbstzentrierung vereinfacht das Eingliedern eines Aufbauteils in ein Pfostenteil sehr. Diese Vereinfachung kann von dem Zahntechniker bei dem Eingliedern des Aufbauteils in das im Gipsmodel (Positivsituation des Patientenmundes) integrierte Pfostenteilanalog bei der Herstellung des individuellen Zahnersatzes genutzt werden. Eine weitere Vereinfachung entsteht bei der Eingliederung des Aufbauteils im Pfostenteil des Patientenmundes.

Die Ausführung und Gestaltung der Verbindungsparameter (z.B. Konuswinkel, Exzentrizität bei ovalen Konusverbindungen, Durchmesserunterschiede, lokale Maxima und lokale Minima, etc.) hat einen grossen Einfluss auf die Qualität der Selbstzentrierung. Über diese Parameter lassen sich die Übersetzungsverhältnisse der Umwandlung von einer translatorischen in eine rotatorische oder umgekehrte Bewegung einstellen bzw. definieren. Wie bei Getrieben nimmt die Reibung zwischen den Kontaktflächen der beweglichen Partner hier das Aufbauteils und das Pfostenteils einen grossen Einfluss auf die Leichtgängigkeit. Es besteht die Gefahr, dass sich bei zu grosser Reibung zwischen dem Aufbauteil, dem Pfostenteil und oder der Verbindungsschraube das Aufbauteil mit dem Postenteil verklemmen oder durch weiter ansteigende Axialkraft über eine Hemmung keine Rotation zwischen dem Aufbauteil und dem Postenteil ergibt. Die Reibung zwischen den Kontaktstellen des Aufbauteils und des Pfostenteils hat somit einen grossen Einfluss auf die Leichtgängigkeit und Zuverlässigkeit der Selbstzentrierung. Weiterhin hat auch die Reibung der Verbindungsschraube zu dem Pfostenteil (über das Gewinde), aber insbesondere die Reibung zwischen der Verbindungsschraube und dem Aufbauteil (über den Schraubensitz), einen grossen Einfluss auf die Leichtgängigkeit der rotatorischen Selbstzentrierung.

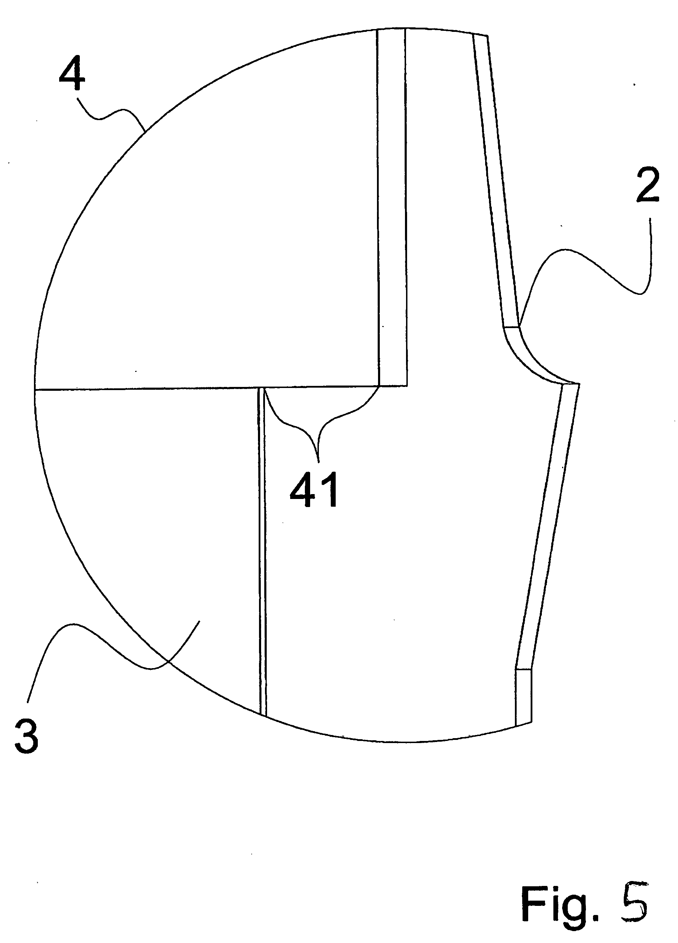

Figur 4 zeigt eine im Schnittbild dargestelltes Pfostenteil 1 mit einem über die Verbindungsschraube 3 monierten und im Teilschnitt dargestellten Aufbauteil 2. Der mit 4 gekennzeichnete Bereich zeigt den Schraubensitz im Aufbauteil 2. Figur 5 zeigt die Vergrösserung des mit 4 in Figur 4 gekennzeichneten Bereichs, der Schraubensitz 41 bildet die Kontaktfläche zwischen dem Aufbauteil 2 und der Verbindungsschraube 3. Diese Kontaktfläche (Schraubensitz) kann wie hier dargestellt plan sein, aber konisch geneigt oder gekrümmt ausgeführt sein. Die Verringerung der Haft- und Gleitreibung an den Kontaktflächen 41 unterstützt die Leichtgängigkeit bei der rotatorischen Selbstzentrierung deutlich.

Die Haft- und die Gleitreibung der folgenden Kontaktstellen haben einen Einfluss auf die Funktionalität der rotatorischen Selbstzentrierung.
1. Die Kontaktflächen der konischen Indizierung von Aufbauteil und Pfostenteil
2. Die Kontaktflächen zwischen der Verbindungsschraube und dem Aufbauteil. Das bedeutet der Schraubensitz in dem Aufbauteil und der Schraubensitz an dem Kopf der Verbindungsschraube

Die Beeinflussung der Gleitund Haftreibungseigenschaften der unter 1. und 2. beschriebenen Flächen hat einen entscheidenden Einfluss auf die Funktionalität der rotatorischen Selbstzentrierung.

Das Einsetzen von Aufbauteilen im Patientenmund hat unterschiedliche Schwierigkeitsgrade. Wenn ein Aufbauteil im Frontzahnbereich eingesetzt werden soll ist dieser Bereich meist leicht zugänglich. Muss ein Aufbauteil allerdings im Seitenzahnbereich eingesetzt werden ist die schwieriger, da dieser Bereich schwer zugänglich ist und z.B. durch die Öffnungsfähigkeit des Mundes stärker beeinflusst wird als der Frontzahnbereich. Es kommt häufiger vor dass Aufbauteile eingesetzt werden und sich nicht beim ersten Versuch in der richtigen rotatorischen Position befinden. Auch kann es vorkommen, insbesondere bei konischen Verbindungstypen zwischen dem Aufbauteil und dem Pfostenteil, bei welchen apikal der Konusflächen eine Indizierung angebracht ist, dass die Verbindungsschraube im Pfostenteil greift, obwohl die rotatorische Position nicht stimmt und bevor das Rotationsgesperre der Indizierung greift. Das bedeutet, dass das Aufbauteil nicht in die Endposition eingebracht wurde (folglich zu hoch sitzt) und trotzdem die Verbindungsschraube montierbar ist. Meist merkt der behandelnde Zahnarzt dies erst, wenn er den Zahnersatz einprobieren möchte. Ein weiteres Problem ist, dass dabei Bereiche des Aufbauteils oder des Pfostenteil beschädigt werden können. Es wäre somit eine deutliche Optimierung, wenn sich das Aufbauteil bezogen auf die rotatorische Ausrichtung selbstständig zentrieren würde, sobald die Verbindungsschraube im Pfostenteil greift.

Die folgenden Oberflächenmodifikationen haben eine positive Wirkung auf die Leichtgängigkeit gezeigt. Das einfache Anodisieren (elektrochemische erzeugen einer Oxidschicht), eine Titannitrierung bzw. eine Titannitridbeschichtung, Chromnitrid, eine Anodisierung Typ II und eine DLC (Diamond like Carbon bzw. Diamon like Coating) Beschichtung (mono- und / oder polykristalline Kohlenstoff/ Diamantbeschichtung). Mit diesen Verfahren konnte die Reibung zwischen den Verbindungspartner so stark reduziert werden (auch bei der Beschichtung von nicht allen Kontaktflächen), dass bei den verschiedenen Verbindungstypen mit der Verwendung der klinisch und mechanisch sinnvollen Parametern eine rotatorische Selbstzentrierung durch das Anziehen der Verbindungsschraube voll gegeben war.

Von grosser Bedeutung ist, dass die Haft- und Reibungsmodifizierende Modifikation bzw. Beschichtung gewebeverträglich ist und zu keinen Reizungen des Hart- und / oder Weichgewebes führt.

Den grössten Einfluss hatten die Beschichtung der Kontaktflächen zwischen dem Aufbauteil und dem Pfostenteil und die Beschichtung von dem Schraubensitz im Aufbauteil und dem Schraubensitz an der Verbindungsschraube. Es konnte allerdings festgestellt werden, dass schon die Beschichtung von nur einer Fläche einen positiven Einfluss hat. Allein die Beschichtung des Schraubensitzes an der Verbindungsschraube oder der Kontaktfläche des Aufbauteils in Richtung dem Pfostenteil zeigte eine deutliche Verbesserung der Leichtgängigkeit.

Versuche haben ergeben, dass die Reduzierung der Kontaktflächen der vorwiegend konisch gestalteten Funktionsflächen der Indizierung bei internen Verbindungen zwischen dem Pfostenteil und dem Aufbauteil zu einem ausserordentlichen Erfolg geführt haben. Interne Verbindungen sind dadurch gekennzeichnet, dass sich in dem Pfostenteil eine Formausnehmung angebracht ist in welche ein am Aufbauteil angeformter Kontaktstift eingreift (Figuren 1 und 2). Bei den Verbindungstypen die auf den Figuren 1 bis 3 dargestellt sind, ist die Verklemmung bzw. Hemmungsgefahr vor dem endgültigen Sitz des Aufbauteils im Pfostenteil grösser. Die Funktionalität konnte insbesondere bei den ovalen Konusverbindungen optimiert werden.

Vergleicht man nun die die gewünschten Eigenschaften von Indizierungen mit konischen Funktionsflächen und rotatorischer Selbstzentrierung bezogen auf die Insertion mit einem direkt in das Pfostenteil eingreifenden Eindrehwerkzeug und bezogen auf die Güte der Selbstzentrierung, fällt auf, dass die begünstigenden Gleitund Haftreibungseigenschaften gegenläufig sind. Die beschriebene Erfindung wirkt der Insertion mittels eines direkt in das Pfostenteil eingreifenden Eindrehwerkzeuges entgegen.

In der Vergangenheit wurden dentale Pfostenteile üblicherweise nach der Insertion mit Weichgewebe gedeckt oder zumindest nicht prothetisch versorgt. Grund hierfür waren die höheren Einheilerfolge. In jüngster Vergangenheit wurden die Aussengewinde dentaler Pfostenteile modifiziert, um eine bessere Verankerung zwischen dem Pfostenteil und dem Kieferknochen zu erhalten. Die bessere Verankerungsqualität erlaubt es, dentale Implantate vorzeitig oder sogar direkt nach der Insertion prothetisch zu versorgen und zu belasten. Es zeigte sich allerdings, dass hierfür das zum Einschrauben nötige Drehmoment ebenfalls anstieg. Die maximal möglichen Drehmomente liegen oberhalb von 50Ncm. Eine Folge hiervon ist, dass bei zu hohem Eindrehmoment die Möglichkeit besteht, dass die Indizierung im Pfostenteil beschädigt wird. Meist merkt der Behandler dies nicht sofort. Die Konsequenzen können in einem solchen Fall dramatisch sein. Es besteht die Möglichkeit, dass ein Implantat, bei welchem die Indizierung beschädigt ist, prothetisch nicht versorgbar ist. Als Konsequenz muss das Pfostenteil unter Umständen aus dem Knochen herausgefräst werden. Der Erfindung liegt die Aufgabe zu Grunde, dies zu vermeiden.

Vormontierte Eindrehpfosten haben gegenüber Eindrehinstrumenten, die direkt in das Pfostenteil eingreifen, Vorteile aber auch Nachteile. Als Vorteile des vormontierten Eindrehaufbauteil sind aufzuführen, dass die Verbindung zum Pfostenteil mit einer Schraube gesichert ist, und dass das Instrument vom Behandler nicht in das Pfostenteil eingeführt werden muss. Als Vorteile des direkten Instrumenteingriffs sind aufzuführen, dass bei dem Verzicht auf den Eindrehaufbauteil und die Verbindungsschraube eine enorme Kostenreduzierung erfolgen kann und das Einbringinstrument nach der Insertion des Pfostenteils nicht demontiert werden muss. Als Nachteil des direkten Instrumenteingriffs ist aufzuführen, dass die Gefahr, die Indizierung, über welche das Eindrehdrehmoment übertragen wird, zu beschädigen, grösser ist als bei einem vormontierten Eindrehaufbauteil. Weiterhin gibt es Verbindungstechniken zwischen Aufbauteilen und Pfostenteilen, bei welchen die im Pfostenteil eingebrachte Ausformung, die als Indizierung fungiert, nicht geeignet ist, um mit einem Eindrehinstrument direkt in diese einzugreifen.

Ovale Konusverbindungen und konische Verbindungen bei welchen der konische Anteil nicht rund gestaltet eignen sich nicht für den direkten Eingriff mit einem Einbringinstrument. Grund hierfür ist, dass bei der Übertragung eines Drehmomentes auch eine Kraft erzeugt wird, die die Bauteile (Pfostenteil und Eindrehaufbauteil) auseinanderdrückt. Dies wiederum bedeutet, dass die Drehmomentübertragung die Verbindung selbst lösen kann und / oder eine Verkantung zwischen dem Implantat und dem Eindrehinstrument entstehen kann. Dieser Effekt würde das Handling und den Umgang mit einem solchen System erschweren.

Ist der Eindrehaufbauteil bereits vormontiert verhindert die Verbindungsschraube das Lösen der Verbindung.

Wenn sich das Eindrehinstrument bedingt durch das Drehmoment beim Eindrehen löst kann dies auch ein Grund für die Beschädigung der Indizierung sein.

Der Erfindung liegt die Aufgabe zu Grunde, ein Dentalimplantat der oben genannten Art anzugeben, mit dem eine leichtgängige und funktionelle rotatorische Selbstzentrierung, welche rein durch das Anziehen der Verbindungsschraube funktioniert, erreichbar ist.

Diese Aufgabe wird erfindungsgemäss gelöst, indem der Verbindungszapfen und daran angepasst der diesem zugeordnete Aufnahmekanal in einem ersten Indizierungsbereich jeweils eine Mehrzahl von zur Längsachse des ersten Implantat-Teils geneigten Kontaktflächen aufweisen, wobei mindestens eine der Kontaktflächen an mindestens einem Implantat-Teil mit einer reibungsreduzierenden Beschichtung versehen ist und wobei das erste, zur Einbringung in den Kieferknochen vorgesehene Implantat-Teil im Verbindungsbereich einen zweiten Indizierungsbereich in Form eines Rotationsgesperres mit in Bezug zur Längsachse des Verbindungszapfens parallelen Funktionsflächen aufweist.

Alternativ wird diese Aufgabe erfindungsgemäss gelöst, indem der Verbindungszapfen und daran angepasst der diesem zugeordnete Aufnahmekanal in einem ersten Indizierungsbereich jeweils eine zur Längsachse des ersten Implantat-Teils geneigte, im Querschnitt ovale Kontaktfläche aufweisen, die an mindestens einem Implantat-Teil mit einer reibungsreduzierenden Beschichtung versehen ist, und wobei das erste, zur Einbringung in den Kieferknochen vorgesehene Implantat-Teil im Verbindungsbereich einen zweiten Indizierungsbereich in Form eines Rotationsgesperres, mit in Bezug zur Längsachse des Verbindungszapfens parallelen Funktionsflächen aufweist.

Somit wird die Reibung zwischen den Kontaktflächen des Aufbauteils, des Pfostenteils und/oder der Verbindungsschraube durch eine Beschichtung oder Oberflächenmodifikation von mindestens einer Kontaktfläche reduziert, um eine rotatorisch hemmende Wirkung während der Montage zu vermeiden. Das Einbringen von Gleitmitteln wäre ebenfalls möglich, ist aber aus klinischen Gründen als fraglich anzusehen. Auch das mechanische, chemische und oder elektrochemische Polieren stellt einen Lösungsansatz dar, hat sich aber in entsprechenden internen Versuchsreihen als möglicherweise nicht immer ausreichend herausgestellt.

Durch die Erfindung wird das rotatorische Gesperre mit der Funktion der Indizierung des Aufbauteils im Pfostenteil von der Funktion des Eindrehvorgangs separiert, indem unterhalb der Indizierung mit einer rotatorischen Selbstzentrierung eine weiter Indizierung in das Pfostenteil eingebracht wird, welche parallelwandig ist und bei rotatorischer Belastung keine abstossende Kraft hervorruft. Diese zweite Indizierung wird lediglich zur Insertion des Pfostenteils in den Kieferknochen genutzt. Eventuell auftretende Beschädigungen wirken sich somit auch nicht auf die spätere Funktion zwischen Aufbauteil und Pfostenteil aus. Art und Geometrie des zusätzlichen rotatorischen Gesperres im Pfostenteil können vielfältig sein. In einer besonders vorteilhaften Ausführung ist die Anzahl der nutzbaren Positionen der zur Indizierung genutzten Formausnehmung identisch der möglichen rotatorischen Positionen in dem rotatorischen Gesperre, welches für die Insertion genutzt wird. Der Vorteil besteht darin, dass der Behandler während der Insertion an dem Eindrehwerkzeug erkennen kann wo die Positionsmöglichkeiten eines Aufbauteils sind, wenn das Eindrehwerkzeug mit entsprechenden Markierungen versehen ist.

Je geringer die Anzahl der Positionsmöglichkeiten des Aufbauteils auf dem Postenteil, desto wichtiger ist es dass der behandelnde Zahnarzt weiss wie die Indizierung / das Rotationsgesperre im Kieferknochen ausgerichtet ist. Folglich ist es von grosser Bedeutung, dass die Anzahl der Positionsmöglichkeiten des Indexes mit den zur Pfostenteilachse bzw.Aufbauteilachse geneigten Funktionsflächen, der für die Aufbauteilindexierung dient und des Indexes welcher parallel zur Pfostenteilachse bzw. Aufbauteilachse ausgerichtete Funktionsflächen besitzt welche zum Einschrauben des Pfostenteils fungieren gleich ist. Auf diesem Wege ist es möglich, an dem Eindrehinstrument und oder am Eindrehaufbauteil Markierungen anzubringen, anhand deren der Behandler erkennen kann, wie die rotatorische Ausrichtung der Indexierung bzw. des rotatorischen Gesperres ist.

## Patentansprüche

1. Dentalimplantat mit einem zur Einbringung in einen Kieferknochen vorgesehenen ersten Implantat-Teil (1) und mit einem diesem zugeordneten, zur Anbringung eines Zahnersatzstücks vorgesehenen zweiten Implantat-Teil (2), wobei die Implantat-Teile (1, 2) über einen an eines der Implantat-Teile angeformten, in einen im anderen Implantat-Teil vorgesehenen Aufnahmekanal (13) einschiebbaren Verbindungszapfen (23) mechanisch miteinander verbindbar sind, bei dem der Verbindungszapfen (23) und daran angepasst der diesem zugeordnete Aufnahmekanal (13) in einem ersten Indizierungsbereich jeweils eine Mehrzahl von zur Längsachse des ersten Implantat-Teils (1) geneigten Kontaktflächen (27) aufweisen, wobei mindestens eine der Kontaktflächen (27) an mindestens einem Implantat-Teil (1, 2) mit einer reibungsreduzierenden Beschichtung versehen ist, und wobei das erste, zur Einbringung in den Kieferknochen vorgesehene Implantat-Teil (1) im Verbindungsbereich einen zweiten Indizierungsbereich in Form eines Rotationsgeperres mit in Bezug zur Längsachse des Verbindungszapfens (23) parallelen Funktionsflächen aufweist.

2. Dentalimplantat mit einem zur Einbringung in einen Kieferknochen vorgesehenen ersten Implantat-Teil (1) und mit einem diesem zugeordneten, zur Anbringung eines Zahnersatzstücks vorgesehenen zweiten Implantat-Teil (2), wobei die Implantat-Teile (1, 2) über einen an eines der Implantat-Teile angeformten, in einen im anderen Implantat-Teil vorgesehenen Aufnahmekanal (13) einschiebbaren Verbindungszapfen (23) mechanisch miteinander verbindbar sind, bei dem der Verbindungszapfen (23) und daran angepasst der diesem zugeordnete Aufnahmekanal (13) in einem ersten Indizierungsbereich jeweils eine zur Längsachse des ersten Implantat-Teils (1) geneigte, im Querschnitt ovale Kontaktfläche (27) aufweisen, die an mindestens einem Implantat-Teil (1, 2) mit einer reibungsreduzierenden Beschichtung versehen ist, und wobei das erste, zur Einbringung in den Kieferknochen vorgesehene Implantat-Teil (1) im Verbindungsbereich einen zweiten Indizierungsbereich in Form eines Rotationsgeperres mit in Bezug zur Längsachse des Verbindungszapfens (23) parallelen Funktionsflächen aufweist.

3. Dentalimplantat nach Anspruch 1 oder 2, bei dem im ersten Indizierungsbereich alle Kontaktflächen (27) der Implantat-Teile (1, 2) mit einer reibungsreduzierenden Beschichtung versehen sind.

4. Dentalimplantat nach einem der Ansprüche 1 bis 3, dessen Implantat-Teile (1, 2) über eine Verbindungsschraube (3) mechanisch miteinander verbindbar sind, wobei der Schraubensitz der Verbindungsschraube (3) im jeweiligen Implantat-Teil (1, 2) mit einer reibungsreduzierenden Beschichtung versehen ist.

5. Dentalimplantat nach einem der Ansprüche 1 bis 4, bei dem beide Indizierungsbereiche für die gleiche Anzahl von Positioniermöglichkeiten ausgelegt sind.

## Claims

1. A dental implant having a first implant part (1) provided for being inserted into a jawbone and having a second implant part (2) associated therewith, provided for attaching a dental prosthetic piece, wherein the implant parts (1, 2) can be mechanically connected to each other via a connection pin (23) which is formed onto one of the implant parts and which can be inserted into a receiving channel (13) provided in the other implant part, wherein the connection pin (23) and, adapted thereto, the receiving channel (13) associated with said connection pin (23), each include in a first indexing zone a plurality of contact surfaces (27) inclined towards the longitudinal axis of the first implant part (1), wherein at least one of the contact surfaces (27) is provided, on at least one of the implant parts (1, 2), with a friction-reducing coating, and wherein said first implant part (1) provided for being inserted into said jaw-bone includes in the connection region a second indexing zone in the form of a rotational lock, with functional surfaces running in parallel to the longitudinal axis of the connection pin (23).

2. A dental implant having a first implant part (1) provided for being inserted into a jawbone and having a second implant part (2) associated therewith, provided for attaching a dental prosthetic piece, wherein the implant parts (1, 2) can be mechanically connected to each other via a connection pin (23) which is formed onto one of the implant parts and which can be pushed into a receiving channel (13) provided in the other implant part, wherein the connection pin (23) and, adapted thereto, the receiving channel (13) associated with said connection pin (23), each include in a first indexing zone a contact surface (27) with an oval cross-section, which is inclined towards the longitudinal axis of the first implant part (1) and which is provided, on at least one of the implant parts (1, 2), with a friction-reducing coating, and wherein said first implant part (1) provided for being inserted into said jawbone includes in the connection region a second indexing zone in the form of a rotational lock, with functional surfaces running in parallel to the longitudinal axis of the connection pin (23).

3. The dental implant of claim 1 or 2, wherein, in the first indexing area, all contact surfaces (27) of the implant parts (1, 2) are provided with a friction-reducing coating.

4. The dental implant of any one of claims 1 to 3, whose implant parts (1, 2) can mechanically be connected to each other via a connection screw (3), wherein the screw seat of the connection screw (3) in the respective implant part (1, 2) is provided with a friction-reducing coating.

5. The dental implant of any one of claims 1 to 4, wherein both indexing areas are designed for the same number of positioning possibilities.

## Revendications

1. Implant dentaire ayant un premier élément d'implant (1) qui doit être introduit dans un os maxillaire et ayant un deuxième élément d'implant (2) y affecté, qui doit être fixé à une pièce dentaire prothétique, dans lequel les éléments d'implant (1, 2) peuvent être reliés l'un à l'autre mécaniquement à l'aide d'un goupille de connexion (23) qui est formée sur l'un des éléments d'implant et qui peut être insérée dans un canal de logement (13) prévu dans l'autre élément d'implant, dans lequel la goupille de connexion (23) et, y adapté, the canal de logement (13) affecté à dite goupille de connexion (23), comprennent chacun dans un premier zone d'indexation une pluralité de surfaces de contact (27) inclinées vers l'axe longitudinal du premier élément d'implant (1), dans lequel au moins une des surfaces de contact (27) est munie, sur au moins l'un des éléments d'implant (1, 2), d'un revêtement diminuant la friction, et dans lequel dit premier élément d'implant (1) qui doit être introduit dans dit os maxillaire comprend dans la zone de connexion une deuxième zone d'indexation sous forme d'un encliquetage rotatif, avec des surfaces fonctionnelles s'étendant en parallèle à l'axe longitudinal de la goupille de connexion (23).

2. Implant dentaire ayant un premier élément d'implant (1) qui doit être introduit dans un os maxillaire et ayant un deuxième élément d'implant (2) y affecté, qui doit être fixé à une pièce dentaire prothétique, dans lequel les éléments d'implant (1, 2) peuvent être reliés l'un à l'autre mécaniquement à l'aide d'un goupille de connexion (23) qui est formée sur l'un des éléments d'implant et qui peut être insérée dans un canal de logement (13) prévu dans l'autre élément d'implant, dans lequel la goupille de connexion (23) et, y adapté, the canal de logement (13) affecté à dite goupille de connexion (23), comprennent chacun dans un premier zone d'indexation une surface de contact (27) avec une section ovale, qui est inclinée vers l'axe longitudinal du premier élément d'implant (1) et qui est munie, sur au moins l'un des éléments d'implant (1, 2), d'un revêtement diminuant la friction, et dans lequel dit premier élément d'implant (1) qui doit être introduit dans dit os maxillaire comprend dans la zone de connexion une deuxième zone d'indexation sous forme d'un encliquetage rotatif, avec des surfaces fonctionnelles s'étendant en parallèle à l'axe longitudinal de la goupille de connexion (23).

3. Implant dentaire selon la revendication 1 ou 2, dans lequel, dans la première zone d'indexation, toutes les surfaces de contact (27) des éléments d'implant (1, 2) sont munies d'un a revêtement diminuant la friction.

4. Implant dentaire selon l'une quelconque des revendications 1 à 3, dont les éléments d'implant (1, 2) peuvent être reliés l'un à l'autre mécaniquement à l'aide d'une vis de connexion (3), dans lequel le logement de vis de la vis de connexion (3) dans l'élément d'implant (1, 2) respectif est munie d'un revêtement diminuant la friction.

5. Implant dentaire selon l'une quelconque des revendications 1 à 4, dans lequel les deux zones d'indexation sont conçues pour le même nombre de possibilités de positionnement.
